(19) Europäisches Patentamt
European Patent Office
Office européen des brevets

(11) **EP 2 925 073 B1**

(12) **EUROPEAN PATENT SPECIFICATION**

(45) Date of publication and mention
of the grant of the patent:
**05.04.2017 Bulletin 2017/14**

(21) Application number: **13819043.4**

(22) Date of filing: **19.11.2013**

(51) Int Cl.:
**H04W 74/08** *(2009.01)*    **H04W 74/00** *(2009.01)*

(86) International application number:
**PCT/ES2013/070800**

(87) International publication number:
**WO 2014/080055 (30.05.2014 Gazette 2014/22)**

(54) **WIRELESS COMMUNICATION MANAGEMENT METHOD**

VERFAHREN ZUR VERWALTUNG EINER DRAHTLOSEN KOMMUNIKATION

PROCÉDÉ DE GESTION DE COMMUNICATIONS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.11.2012 ES 201231796**

(43) Date of publication of application:
**30.09.2015 Bulletin 2015/40**

(73) Proprietor: **Wireless Partners S. L. L.**
**28034 Madrid (ES)**

(72) Inventor: **BÓVEDA DE MIGUEL, Ángel**
**E-28034 Madrid (ES)**

(74) Representative: **Pons**
**Glorieta Ruben Dario 4**
**28010 Madrid (ES)**

(56) References cited:
• RTX: "ULE FP traffic channel selection;DECT(12)000293_ULE_FP_traffic_ch annel_selection", ETSI DRAFT; DECT(12)000293_ULE_FP_TRAFFIC_CHANNEL _SELE CTION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. DECT, 19 November 2012 (2012-11-19), pages 1-2, XP014079862, [retrieved on 2012-11-19]

• RTX: "ULE MAC ME issues;DECT(12)000237r1_ULE_MAC-layer_issu es", ETSI DRAFT; DECT(12)000237R1_ULE_MAC-LAYER_ISSUES, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. DECT, 25 September 2012 (2012-09-25), pages 1-6, XP014079723, [retrieved on 2012-09-25]

• OWEN F C ET AL: "DECT-integrated services for cordless telecommunications", 19890101, 1 January 1989 (1989-01-01), pages 152-156, XP006517352,

• KALLOL DAS ET AL: "Evaluation of DECT-ULE for robust communication in dense wireless sensor networks", INTERNET OF THINGS (IOT), 2012 3RD INTERNATIONAL CONFERENCE ON THE, IEEE, 24 October 2012 (2012-10-24), pages 183-190, XP032297327, DOI: 10.1109/IOT.2012.6402321 ISBN: 978-1-4673-1347-6

• "Digital Enhanced Cordless Telecommunications (DECT); DECT Ultra Low Energy (ULE); Machine to Machine Communications; Part 1: Home Automation Network (phase 1)", ETSI DRAFT; DECT-ULE000268-1V005, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.0.5, 16 November 2012 (2012-11-16), pages 1-138, XP014071261, [retrieved on 2012-11-16]

## Description

## OBJECT OF THE INVENTION

The present invention relates to the field of telecommunications, more specifically to the field of wireless communications.

The object of the invention consists of a method for managing the communications established between a wireless device that communicates via radio waves and a base station, where both devices make use of a wireless communications standard, in particular an extension of Digital Enhanced Cordless Telecommunications (DECT) technology.

## BACKGROUND OF THE INVENTION

The DECT Standard is short/medium range radio mobile technology destined for providing mobile communications in residential, corporate or public environments. It is defined by a series of ETSI standards, of which the most relevant to the present case (and most recent published edition) are the following:

- EN 300 175-1: DECT CI; Overview v2.4.1
- EN 300 175-2: DECT CI; Physical layer v2.4.1
- EN 300 175-3: DECT CI; MAC layer v2.4.1
- EN 300 175-4: DECT CI; DLC layer v2.4.1
- EN 300 175-5: DECT CI; NWK layer v2.4.1
- EN 300 175-6: DECT CI; Identities and addressing v2.4.1
- EN 300 175-7: DECT CI; Security v2.4.1
- EN 300 175-8: DECT CI; Audio and speech v2.4.1

This group of eight specifications is known as "DECT base standard" or "DECT Common Interface (DCET CI)".

DECT establishes communications between base stations and wireless devices generally, but not necessarily, portable. In this description, the term "base station" and "wireless device" will be used to define the two radio termination protocols. In the case of DECT, the standard refers to the base station as "Fixed Part-RFP" and to the wireless device as "Portable Parts - PPs".

DECT Ultra Low Energy (ULE) is a further evolution of the standard currently under development destined for low data rate applications powered by batteries requiring ultra-low power consumption, such as remote controls, electrical switches, alarm sensors, temperature sensors, etc.

DECT ULE will be specified by means of a new edition (v2.5.1) of the base standard (DECT CI, EN 300 175-x) and the technical specification TS 102 939-1: the title of which will be: "Digital Enhanced Cordless Telecommunications (DECT); DECT Ultra Low Energy (ULE); Machine to Machine Communications; Part 1: Home Automation Network (phase 1)".

DECT is a TDMA/TDD system. The basic DECT frame structure is repeated every 10 ms and has 24 slots numbered from 0 to 23. Slots 0 to 11 are generally used for traffic from the fixed part to the portable part (downlink). Slots 12 to 23 are generally used for traffic from the portable part to the fixed part (uplink). This provides a maximum of twelve full slot duplex channels. Other distributions of the frame structure are possible using double slots or long slots, which use two basic channels each.

Each slot can be transmitted on several radio carriers (frequencies). In Europe there are ten. Therefore, there are a total of 120 over-the-air DECT channels.

A "normal" DECT unit has only one transceiver radio. Only one channel per slot can be used, although the carrier can be chosen and changed from one slot to another.

In one of the downlink slots, the base transmits a special structure called "dummy bearer". This slot is therefore useless as a traffic channel. The dummy is a downlink broadcast channel wherethrough the base station identity, synchronisation information, base information and paging channels are transmitted. In ULE, this dummy is longer compared to the normal DECT dummy and will also transmit specific ULE information, for example, the channel selection information described later in the text.

The uplink slot corresponding to the dummy is not generally used. The frames are numbered and form a sequence of 16 frames called multiframe. The frame/multiframe numbers are transmitted in the dummy bearer, which also transmits the base station identity.

A ULE portable part PP may be in "deep sleep" mode. When it needs to synchronise with the base station, it starts searching for the dummy bearer, which provides information about the base station identity and frame/multiframe numbers.

In DECT, the base station permanently listens for possible access attempts by portable parts PP on a channel that changes from frame to frame in accordance with a pre-established rule. This is called the "Primary Receiver Scan Bearer Number (PSCN)". A portable part PP that wants to establish a bearer must do so in the PSCN (otherwise the base station will not listen to it).

In DECT ULE it is always the portable part PP which attempts to establish a bearer. If it were the base station attempting to establish a bearer, it would firstly broadcast it via a paging channel and the portable part PP would respond by establishing the bearer.

A relevant part of DECT technology is the channel selection mechanism. In the case of DECT, the selection of channels is performed by the wireless device using a method called Dynamic Channel Assignment or DCA defined in specification EN 300 175-3, edition v2.4.1.

In accordance with the DECT standard, the channels (slot x carrier) are selected by the portable parts (PPs). These, during their free slots, periodically listen on all the available channels, measuring their radio energy (RSSI). The DCA process defined in EN 300 175-3 defines the rules governing channel selection by the portable parts (PPs), which is broadly based on the identification of least interfered channels (having a lower RSSI residual level).

The DCA process is not convenient or energy efficient for the design of ultra low energy consumption wireless devices due to the requirement of permanently having to listen on radio channels.

The concept of channel selection aided by the base has been proposed as an alternative to DCA. The common characteristic of this concept is that the base station is in charge of broadcasting presumably free and usable channels. As of this point there are multiple alternatives for both the manner in which the base station determines the presumably free and usable channels and the method that must be followed by the wireless device to use said information and decide on which channel it will attempt to establish a connection.

In DECT, due to the primary scan sequence or PSCN concept described earlier, the transmission of the channel broadcast emitted by the base can be implemented by means of a 12 bit mask transmitted in the dummy of a Frame N, indicating which slots are free and usable in the access frequency (frequency in which the base station will listen according to the PSCN) in a future frame N+m. The value of the temporal distance m can be any so long as it is known. This value m can be chosen in accordance with the processing capacity of the implementation, which may be as low as N+1.

"Free and usable" means that said channels (slot x carrier) are clean (unused) and that the slot is also usable by the base (for example, because it is not being used in another frequency) or because its radio oscillator allows the necessary change of frequency to use it.

Other wireless technologies may require different transmission formats.

Once the broadcast sent by the base station has been received, the portable part PP must execute its own channel selection process making use of the information transmitted by the base station and may incorporate other elements such as channel listening by the wireless device in order to confirm the decision of the portable part (PP), or the introduction of random formulas to improve the equitable use of all the channels and/or reduce the probability of radio collision.

Lastly, the wireless device is in charge of verifying whether the connection attempt was successful or unsuccessful. The latter case is particularly complex because it could be due, among other things, to radio collision with an access attempt made by another wireless device of the same or another system. The set of channel selection processes of the wireless device must be capable of correctly managing this circumstance by introducing steps to eliminate or significantly reduce the probability of repetition of radio collision, even in the case of multiple repetitions, which could occur if the process for managing the situation is not correctly designed.
Some documents have been found concerning this problem. In this sense the applicant is aware of:

- RTX: "ETSI TC DECT 20th - 22nd November 2012 meeting; ULE FP traffic channel selection; EUROPEAN TELECOMMUNICATIONS STANDARDS INSTITUTE (ETSI), 650, ROUTE DES LUCIOLES ; F-06921 SOPHIA-ANTIPOLIS ; FRANCE, 19 November 2012 (server date 2012-11-19; *downloaded by EPO on 2012-12-05))*

- RTX: "25th September 2012 TC-DECT ULE conference call; ULE MAC ME issues; DECT(12)000237r1_ULE_MAC-layer_issues", ETSI DRAFT; DECT(12)000237R1_ULE_MAC-LAYER_ISSUES, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. DECT, 25 September 2012 (server date 2012-09-25; downloaded by EPO on 2012-12-05*).*

The documents cited above disclose communication management methods between a base station and a wireless device; but no one of the methods disclosed thereby proposes a combined algorithm including a collision prevention algorithm comprising a random step combined with a back-off algorithm for collision management introducing a second random component.

## DESCRIPTION OF THE INVENTION

The object of the present invention is the set of methods that implement the steps and processes for selecting channels, accessing and managing possible collisions in the wireless devices that operate on a channel selection scenario aided by information broadcasted by the base station, particularly using an extension of DECT technology.

This invention focuses on the "wireless device" side of the radio link in DECT (called "Portable part PPs" in DECT technology) and can be combined with various channel pre-selection methods on the base station side.

The method described herein presents various mechanisms based on processes such as the channel selection process that must be performed by a wireless device that wants to establish communication and is not attempting to access after an error in a previous access that requires resolution by a collision management process. Another process disclosed and comprised in this invention is the collision management and new channel selection process that must be performed by a wireless device wanting to establish communication after an error in a previous process in which the possibility of being due to a collision cannot be ruled out.

As described below, the channel selection process that must be performed by a wireless device is based on a step in which a selection is made from among a list of channels (at least one) within a proposal transmitted by the base, which are randomly ordered and is combined with previous listening thereon to determine whether they are actually in radio silence mode, establishing access via the first channel within the resulting random order that fulfils radio silence criteria.

The process described in the invention has the merit of contributing to distributing the traffic between all the available slots, avoiding interferences with other devices or base stations that could be operating on the same channels and reducing the probability of radio collisions if several devices attempt to access simultaneously. The latter is made possible by the random step introduced, due to the fact that various wireless devices executing the same process simultaneously will not necessarily choose the same channel from among those proposed by the base.

Given that the quality or characteristics of the channel must be determined, a series of methods deemed valid to determine the radio silence status of the candidate channel are also described herein.

Another object of the present invention is the implementation of collision management when it is determined that a channel cannot or should not be used to establish the connection. Said implementation described herein is activated by a previous access error that could be compatible with a collision. Given the characteristics inherent to the event, the invention proposed herein determines at least two collision management methods.

The first method is based on the introduction of a t-frame standby time, where t is generated by a random process, followed by the execution of the channel selection steps. The standby time is calculated based on the following formula (Equation A):

$$t = a + RAN(0, j\text{-}1),$$

where $j = b * c^n$, being:

- n a natural series starting from 0 in the first execution and increasing on each additional execution of the process up to a maximum value nmax, as of which it stops increasing;
- a, b, c and nmax parameters of the system, where a may be equal to 0; and
- RAN(0, j-1) is an integer chosen randomly between 0 and j-1.

In the event that the error is repeated, said steps are repeated, increasing the value of n until it reaches a maximum value nnmax. This first method solves the problem of avoiding new collisions due to the variable standby time t, which will not necessarily be the same when calculated by two different wireless devices, and whose range of possible values increases in the event of multiple collisions.

A second method is based on the fact that the variable standby interval is not calculated in frames, but rather in usable slots. In this case, the process initially calculates a value s that defines a number of channels pre-selected by the base that said base station must transmit (in one or several frames) before the device performs the access attempt. The process can continue by either executing the channel selection process using the channel selection information broadcasted by the base in the frame in which the total number of channels reaches the value s or by directly selecting the channel in which the value s has been reached as a first access candidate.

The value s is calculated as (Equation B):

$$s = a + RAN(0, j\text{-}1),$$

where $j = b * c^n$, being:

- n a natural series starting from 0 in the first execution and increasing on each additional execution of the process up to a maximum value nmax, as of which it stops increasing;
- a, b, c and nmax parameters of the system, where a may be equal to 0; and
- RAN(0, j-1) is an integer chosen randomly between 0 and j-1.

The invention is complemented by an ancillary mechanism that can be used by the base station to supplement its list of channels and with a change in the definition of the maximum lifetime in the MAC layer, both closely related to the objects of the invention.

The ancillary measurement mechanism proposed attempts to solve the problem that the base station may be unable to efficiently listen on all the channels due to the use of slots by existing communications and to the fact that it must be aware of possible accesses in the scan sequence frequency. In order to give to the base station greater flexibility, certain wireless devices that do not require significant energy savings, for example, devices powered directly by mains supply or by rechargeable batteries, can be enabled to perform RSSI measurements of the radio channels in their physical position, transmitting said information by means of a new message that the wireless device transmits in the uplink bearer of the same slot used for the dummy, given that said uplink bearer is not being used. Said transmission is made in an uplink bearer every certain number of frames in a sequence configured or agreed upon with the base. This will make it possible to have several wireless devices providing information.

The change in the definition of MAC lifetime is a mechanism specific to DECT or its derivatives and solves the problem that the current definition is too short to allow execution of channel selection processes that introduce delays as the proposed process. The current maximum lifetime already defined in EN 300 175-3 is divided into two lifetimes, a maximum lifetime at bearer level and another lifetime at MAC layer level. In the former, the current parameter defined by means of the "Attributes" message is used and, in the latter, which may be longer, an information element at network layer level is used, such as IEs "<<Transit Delay>>" (defined in EN 300 175-5 clause 7.7.42), where said information element can be integrated in a "Basic Service" and substituted for the transmission of the «Basic Service» information element defined by EN 300 175-5 clause 7.6.4, with the Basic Service code, in the definition of which «Transit Delay» has been integrated.

## DESCRIPTION OF THE DRAWINGS

In order to complement the description being made and with the object of helping to better understand the characteristics of the invention, in accordance with a preferred embodiment thereof, said description is accompanied, as an integral part thereof, by a set of drawings where, in an illustrative and non-limiting manner, the following has been represented:

Figure 1 shows a flow chart of the set of channel selection processes in which the blocks of the processes object of the invention are defined.
Figure 2 shows a descriptive flow chart of the channel selection process performed by the wireless device object of the invention.
Figure 3 shows a descriptive flow chart of the first method of the process in charge of managing possible collisions by the wireless device, according to the first implementation option, object of the invention.
Figure 4 shows a descriptive flow chart of the second method of the process in charge of managing possible collisions by the wireless device, according to the first implementation option, object of the invention.

## PREFERRED EMBODIMENT OF THE INVENTION

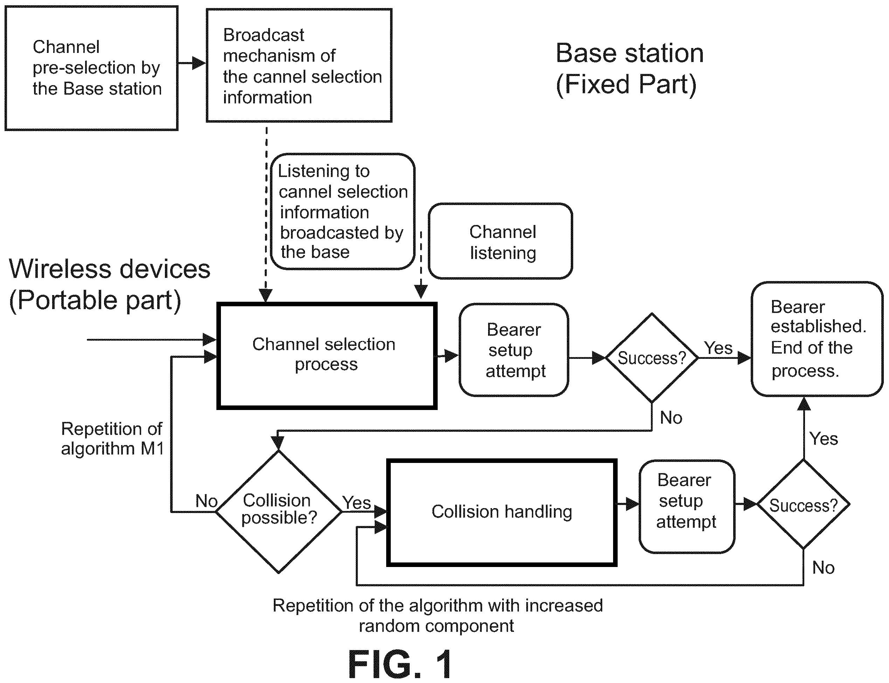

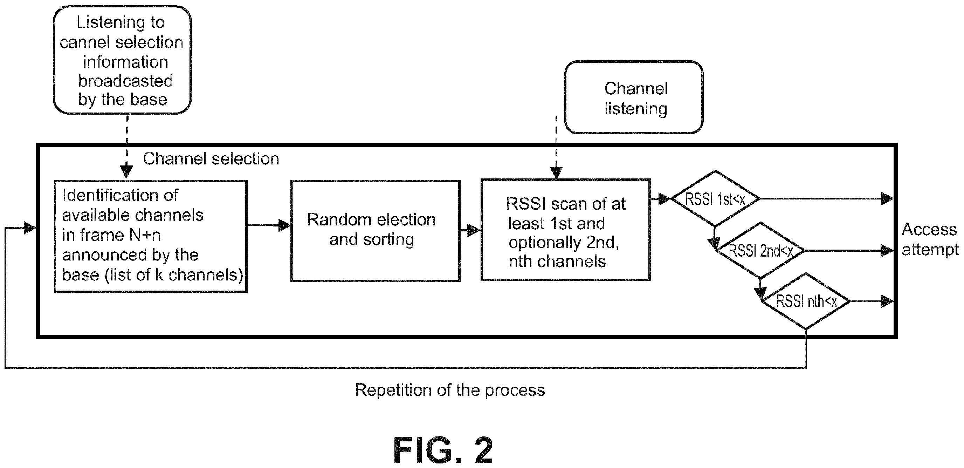

In light of the figures, following is a description of a preferred embodiment of the wireless communication management method object of this invention.
In a scenario with at least one base station (also called base in this document) and at least one wireless device wanting to establish a communication connection with said base station preferably using the DECT Standard, it can be observed that establishing said communication requires the use of at least one communication channel comprising frames, slots and carrier frequencies, channel wherethrough said communication can be established, specifying said channel as a candidate connection channel.
Among all the possible connection channels that may be susceptible of being used, the base station selects a certain k number of channels, creating and transmitting a list of k channels that the base station considers to be free as observed in figure 1, and which can also be used by the base station in accordance with its implementation limitations. Said channel broadcast relates to a future instant relative to the moment in which the broadcast is emitted, where the time difference is known by both parties and may be as small as N+1, being N the frame in which it transmits the channel broadcast, where said list comprises at least one slot number of each channel.
A wireless device wanting to establish a connection firstly listens to a broadcast of the list of k channels transmitted by the base station. From among all the channels included in the list of k channels, the wireless device creates a group of n channels (where n is comprised between 1 and k) randomly chosen from among the channels comprised within the list of k channels transmitted. If n is greater than 1, the wireless device sorts randomly the group of n channels.
At least one candidate connection channel positioned at the top of the sorted list of n channels is selected by means of the wireless device from among the group of n channels, specifying the candidate connection channel selected in the previous step provided that said channel is in radio silence mode; in order to determine whether said channel is in radio silence mode, said channel is listened to in at least one frame interval, in at least one direction during the time comprised between the broadcast of available channels made by the base and the instant of access to which the channel broadcast makes reference; if the wireless device performs a RSSI (Receive Signal Strength Indication) measurement in at least one time interval of said candidate channel and in at least one direction of transmission, and compares it with a RSSI threshold value (the RSSI threshold value is comprised, e.g. between -93 dBm and -75 dBm), the candidate channel is deemed to be in radio silence mode if the RSSI value measured is below the threshold value, where said value can be the average RSSI or RSSI measured in the worst direction or in the worst time interval if several measurements have been made; in an alternative embodiment, the RSSI measurement is made based on a slot time interval where the slot is divided into sections, whereupon the RSSI is measured separately for each section and are considered to not fulfil the radio silence criteria if any of the values measured is above the threshold value. If it is determined that the candidate channel is in radio silence mode, an access can be established between the wireless device and the base station by means of a bearer using the aforementioned candidate connection channel.
This case would represent a preferred embodiment that is illustrated in figure 2, wherein the first channel listed in the group of n channels is in radio silence mode; however, this is not always the case, due to which the method described herein also envisages the possibility of choosing, from among the other channels comprised in the group of n channels, at least one alternative channel in order to subsequently verify whether or not said alternative channel is in radio silence mode. This is carried out for a scenario wherein the candidate channel is not in radio silence mode, in order to establish access between the wireless device and the base station by means of a bearer using said alternative connection channel. Logically, said alternative channel may be any of the group of n channels. In one embodiment, said alternative channel is selected in sequential order from the list of the group of n channels in the list of k channels; however, said selection may not follow the sequentially established order and may be performed in any other way; for example, randomly or reversing the sequential order.

Given that it could happen that neither the candidate channel nor the alternative channel fulfil the previously described radio silence criteria, the possibility of selecting at least one ancillary channel other than the candidate channel and the alternative channel from among the group of n channels is also envisaged, in order to, subsequently and in the same manner as the candidate and alternative channels, verify whether said ancillary channel is in radio silence mode, in order to establish the connection via the first ancillary channel according to the list of n channels that is in radio silence mode.

If none of the channels of the group of n channels passes the listening and radio silence verification phase, the access attempt in the time interval to which channel information transmitted by the base is abandoned and the previously defined process is repeated, starting with the observation of a new transmission of channel information emitted by the base and repeating the random selection by the wireless device of at least one objective channel based on this information.

Once a channel has been selected, the wireless device attempts to connect at physical level by means of a bearer establishment message. The wireless device observes and analyses the response emitted by the base station to the connection establishment attempt, or absence thereof, in order to determine whether the connection was successful or unsuccessful and generating, in the event that it is successful, a successful connection message. It may even determine whether the erroneous response or non-response is compatible with a possible collision or if this cause can be ruled out.

If the response is satisfactory, i.e. it has a successful connection message, the channel selection process described in this invention is concluded. The device or base station exchange data or signalling over the established bearer, which is released on concluding the transmission, until a new need for data transmission triggers a new channel selection process. This process can also occur when the bearer used in the transmission has deficient radio quality and must be replaced by another one.

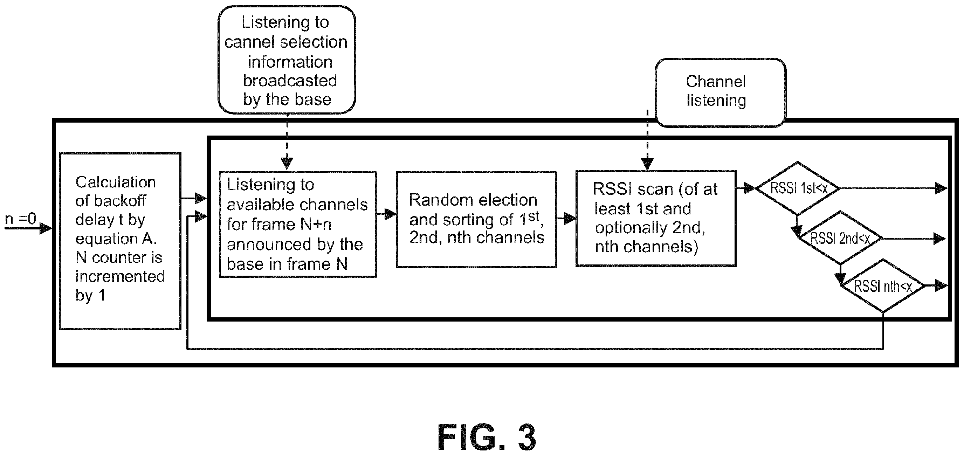

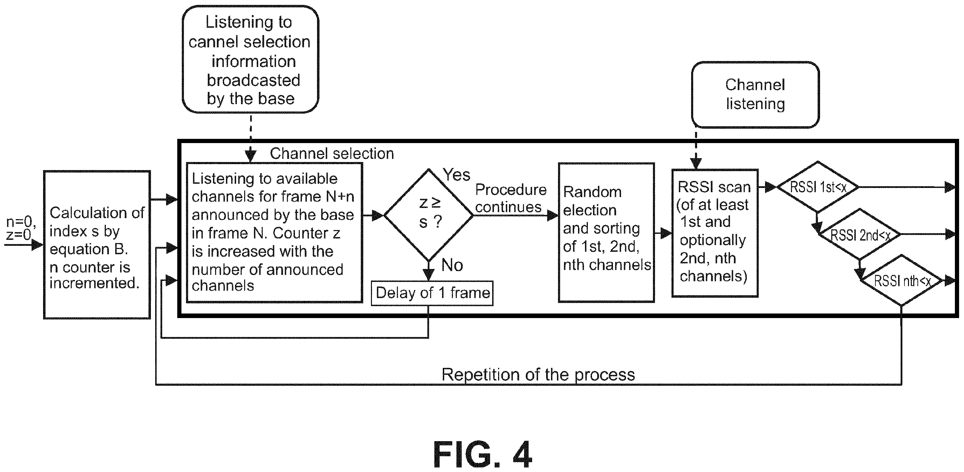

If the response is not satisfactory and the implementation cannot rule out that it is due to radio collision with another wireless device, then at least one specific collision management process such as those observed in figures 3 and 4 is in charge of managing the following access attempt and channel selection thereof. In order to correctly mitigate possible successive collisions, the process proposed adds a variable delay calculated randomly within an interval that grows with each execution thereof. Said delay can be calculated in frames or alternatively in channels broadcasted by the base, both alternatives being possible. The latter alternative has the advantage of automatically adjusting the delay interval according to the number of channels broadcasted by the base in each frame, which is convenient as a greater number of options (channels) proposed by the base means less probability of collision and, thus, less absolute delay (in time).

In the event of unsuccessful connection, this may or may not be due to a collision. To this end, the method described herein comprises, in turn, a series of steps, some of which are based on iterations, which allow, if possible, continued attempts at obtaining said successful connection and establishing the connection.

Said methods or sub-methods to be carried out in the case of unsuccessful connection are based on the repetition of the steps of generating, creating and broadcasting the list of k channels and the creation of the group of n channels after a standby time of t frames has elapsed, having a growing random component in the case of multiple executions, where said standby time is calculated as $t = a + RAN(0, j-1)$, where $j = b * c^n$ , being:

- n a natural series starting from 0 in the first execution and increasing on each additional execution of the process up to a maximum value nmax, as of which it stops increasing;
- a, b, c and nmax parameters of the system, where a may be equal to 0, and
- $RAN(0, j-1)$ is an integer chosen randomly between 0 and j-1.

After said standby time has elapsed, the steps of the process of generating the aforementioned list of k channels and group of n channels are carried out, i.e. creating, by means of the base station, a list of k free channels within a range of time intervals for a wireless connection with said station, where said list comprises at least one slot number of each channel, and periodically transmits said list, whereupon it proceeds to:

○ listen, by means of the wireless device, to the list of k channels transmitted by the base station for accessing within a certain time interval;
○ create, by means of the wireless device, a group of n channels randomly selected from among the channels comprised within the list of k channels, where n is comprised between 1 and k;
○ randomly order, if n is greater than 1, said group of n channels by means of the wireless device; and
○ choosing, by means of the wireless device, at least one candidate connection channel located in first place in the sorted group of n channels.

Once we have completed said steps, the following can be carried out, in a preferred embodiment: a) determine, by means of the wireless device, that the candidate connection channel selected in the previous step is in radio silence mode by listening on said channel in at least one frame interval, in at least one direction for the time comprised between the broadcast of available channels made by the base and the access instant to which the channel broadcast refers; and b) establish an access between the wireless device and the base station by means of a bearer, using the selected candidate connection channel when it is determined that the candidate connection channel is in radio silence mode.

In an alternative embodiment of this process, at least one alternative channel is selected from among the other channels comprised in the group of n channels in order to subsequently verify whether the alternative channel is in radio silence mode and establish the connection via the alternative channel if it is in radio silence mode. In another possible embodiment, at least one ancillary channel other than the candidate connection channel and the alternative channel can be selected from among the group of n channels, verifying whether said ancillary channel chosen in the previous step is in radio silence mode and establishing the connection via the first ancillary channel following the order of the group of n channels in radio silence mode.

If no channel of the group of n channels passes the radio silence listening and verification phase, the access attempt in the time interval to which the channel information transmitted by the base refers is abandoned, and the process defined in claim 1 is repeated, starting with the observation of a new transmission of channel information emitted by the base and repeating the random selection of at least one target channel based on this new information.

In order to determine whether a channel is in silence mode, the wireless device performs an RSSI (Receive Signal Strength Indication) measurement in at least one time interval of said channel and in at least one transmission direction, and compares it with a RSSI threshold value, considering the channel to be in radio silence mode if the RSSI value measured is below the threshold value, where said value can be the average RSSI or RSSI measured in the worst direction or in the worst time interval if several measurements have been made. Said RSSI measurement is made based on a time slot where the slot is divided into sections, whereupon RSSI is measured separately for each section, whereupon the values measured are not considered to fulfil the radio silence criteria if any of them is above the RSSI threshold value, which is comprised, e.g., between -93 dBm and -75 dBm.

Next, the response emitted by the base is determined in order to analyse, by means of the wireless device, the response emitted by the base to the connection establishment attempt, or absence thereof, and to determine whether the connection was successful, whereupon a successful connection message would be generated.

Until a successful connection has been established or the connection attempt has been abandoned, the method described herein comprises executing the steps described in each of the possible embodiments, increasing the value of n if it is less than nmax if the previous step gives rise to a connection establishment response that does not comprise a successful connection message.

In order to correctly execute the method and its sub-methods, particularly a part that can introduce significant delays in cases of multiple collisions, the concept of maximum MAC lifetime is redefined, dividing it into two lifetimes, one at bearer level and the other at MAC layer level.

This invention uses the current mechanism to define the lifetime (via the MAC message "Attributes" and certain variants of the MAC message "Access Request") in order to define the lifetime at bearer level (TBC), while the lifetime at full MAC layer level is defined either by configuration or by means of an information element at DECT network level. The use of «Transit Delay» (defined in EN 300 175-5 clause 7.7.42) is proposed, said information element being integrable within a "Basic Service" and substituted for the transmission of the «Basic Service» information element defined by EN 300 175-5 clause 7.6.4.

Where MAC means Media Access Control, a DECT layer that is described in ETSI EN 300 175-3, and TBC means Traffic Bearer Control, a functional entity in the DECT MAC layer that is described in ETSI EN 300 175-3.

**Claims**

1.  A wireless communication management method between a base station and at least one wireless device, said method comprising:

    • the base station broadcasting presumably free and usable channels, creating, by means of the base station, a list of k free channels within a range of time intervals for a wireless connection with said base station, where said list comprises at least a slot number for each channel; and
    • the base station periodically broadcasting said list;

    the method being **characterised in that** it comprises the following steps:

    • i) listening, by means of the wireless device, the list of k channels broadcasted by the base station for accessing within a certain time interval;
    • ii) creating, by means of the wireless device, a group of n channels randomly selected from among the channels comprised within the list of k channels, being n comprised between 1 and k;

• iii) randomly ordering, if n is greater than 1, said group of n channels by means of the wireless device;

• iv) selecting, by means of the wireless device, at least one candidate connection channel positioned in first place in the group of n channels;

• v) determining, by means of the wireless device, that the candidate connection channel selected in the preceding step is in radio silence mode by listening on said channel in at least one frame interval, in at least one direction during the time comprised between the broadcast of available channels emitted by the base and the access instant to which the channel broadcast refers; and

• vi) when it is determined that the candidate connection channel is in radio silence mode; establishing access between the wireless device and the base station by means of a bearer using the selected candidate connection channel,

• vii) when it is determined that the candidate connection channel is not in radio silence mode, repeating the steps i to v starting with the observation of a new broadcast of channel information emitted by the base station and repeating the random selection by the wireless device of at least one target channel based on this new information until a candidate connection channel in radio silence mode is found,

• viii) analysing, by means of the wireless device, a response emitted by the base station to the attempt to establish connection, or absence thereof,

• ix) determining the connection as successful when the response emitted by the base station to the attempt to establish connection, comprises a successful connection message, and

• x) executing a collision management process that comprises the establishment of a standby time that can be measured in either frames or in slots and that has a random component, when the response emitted by the base station does not comprise a successful connection message.

2. A method, according to claim 1, **characterised in that** it additionally comprises:

    • selecting at least one alternative channel from among the other channels comprised in the group of n channels;

    • verifying whether the alternative channel is in radio silence mode;

    • establishing the connection via the alternative channel if it is in radio silence mode and the candidate connection channel is not in radio silence mode.

    • if no channel of the group of n channels passes the listening and verification of radio silence phase, the access attempt within the time interval to which the channel information transmitted by the base refers is abandoned and the process defined in claim 1 is repeated, starting with the observation of a new broadcast of channel information emitted by the base and repeating the random selection by the wireless device of at least one target channel based on this new information.

3. A method, according to claim 2, **characterised in that** it additionally comprises:

    • choosing at least one ancillary channel other than the candidate channel and alternative channel from among the group of n channels;

    • verifying whether said ancillary channel selected in the preceding step is in radio silence mode; and

    • establishing the connection through the first ancillary channel following the order of the group of n channels that are in radio silence mode.

    • if no channel of the group of n channels passes the listening and verification of radio silence phase, the access attempt within the time interval to which the channel information transmitted by the base refers is abandoned and the process defined in claims 1 and 2 is repeated, starting with the observation of a new broadcast of channel information emitted by the base and repeating the random selection by the wireless device of at least one target channel based on this new information.

4. A method, according to any one of claims 1 to 3, **characterised in that**, in order to determine whether a channel is in radio silence mode, the wireless device performs a RSSI Receive Signal Strength Indication measurement in at least one time interval of said channel, and in at least one direction of transmission, and compares it with a RSSI threshold value, considering the channel to be in radio silence mode if the RSSI value measured is below the threshold value, where said value can be the average RSSI or RSSI measured in the worst direction or in the worst time interval if several measurements have been made.

5. A method, according to claim 4, where the RSSI measurement performed over a slot time interval comprises the slot divided into sections, whereupon their RSSI is measured separately and are considered to not fulfil the radio silence criteria if any of them is above the threshold value.

**6.** A method, according to claim 1, wherein the connection establishment status response does not comprise a successful connection message, comprising executing the collision management process and being **characterized by**:

- the standby time is measured in frames having a growing random component in the case of multiple executions, where said standby time is calculated as $t = a + RAN(0, j-1)$, where $j = b * c^n$, being:

- n a natural series starting from 0 in the first execution and increasing on each additional execution up to a maximum value nmax, as of which it stops increasing;
- a, b, c and nmax parameters of the system, where a may be equal to 0; and
- RAN(0, j-1) is an integer chosen randomly between 0 and j-1;

- next, carrying out the steps i to iv of claim 1;
- carrying out the steps v to vii of claim 1;
- determining the response emitted by the base, according to steps viii and ix of claim 1 ; and
- repeating the steps of this claim, increasing the value of n if it is lower than nmax if the preceding step gives rise to a connection establishment status response that does not comprise a successful connection message.

**7.** A method, according to claim 1, wherein the connection establishment status response does not comprise a successful connection message executing the collision management process wherein the standby time is measured in slots, the method being **characterized by**:

- calculating a value s as $s = a + RAN(0, j-1)$, where $j = b * c^n$, being:

- n a natural series starting from 0 in the first execution of the method and increasing on each additional execution of the process up to a maximum value nmax, as of which it stops increasing;
- a, b, c and nmax parameters of the system, where a may be equal to 0; and
- RAN(0, j-1) is an integer chosen randomly between 0 and j-1; and

- executing the step i described in claim 1 at least once, counting the number of k channels broadcasted by the base and repeating the step and accumulating this value k until the sum accumulated in the iterations reaches the value s; and
- when the accumulated value reaches the value of s, executing the steps ii to vii of claim 1.

- determining, by means of the wireless device, the response emitted by the base to the attempt to establish connection, or absence thereof, in order to determine whether or not the connection was successful; and
- repeat the steps of this claim, increasing the value of n if it is less than nmax if the preceding step gives rise to a connection establishment status response that does not comprise a successful connection message.

**8.** A method, according to claim 1, wherein the connection establishment status response does not comprise a successful connection message, executing the collision management process, wherein the standby time is measured in slots, the method being **characterized by**:

- calculating a value s as $s = a + RAN(0, j-1)$, where $j = b * c^n$, being:

- n a natural series starting from 0 in the first execution of the method and increasing on each additional execution of the process up to a maximum value nmax, as of which it stops increasing;
- a, b, c and nmax parameters of the system, where a may be equal to 0; and
- RAN(0, j-1) is an integer chosen randomly between 0 and j-1; and

- executing the step i described in claim 1 at least once, counting the number of channels k broadcasted by the base and repeating the step and accumulating this value k until the sum accumulated in the iterations reaches the value s;
- when the accumulated value reaches the value of s, selecting as candidate channel the channel from among those transmitted by the base in which the sum of the accumulated transmitted channels reaches the value s; and
- applying the steps v to vii of claim 1 to the channel selected in the preceding step.
- determining, by means of the wireless device, the response emitted by the base to the attempt to establish connection, or absence thereof, in order to determine whether or not the connection was successful; and
- repeating the steps of this claim, increasing the value of n if it is less than nmax if the preceding step gives rise to a connection establishment status response that does not comprise a successful connection message.

**9.** A method, according to claim 1, **characterised in that** it additionally comprises, by means of the base station and for the purpose of obtaining the list of free and usable channels, systematically listening on channels on which it is not transmitting and determing their usability by calculating the RSSI value.

10. A method, according to claim 1, **characterised in that** it additionally comprises, by means of the base station and for the purpose of obtaining the list of free and usable channels, receiving information on RSSI measurements performed by the wireless devices registered thereat.

11. A method, according to claim 10, **characterised in that** the information on the RSSI measurements performed by the wireless devices registered at the base is transmitted to the base using an uplink bearer of a duplex channel that carries the channel selection information in descending order.

12. A method, according to any one of the preceding claims, **characterised in that** it additionally comprises defining at least two lifetimes in the MAC layer, one defining the maximum lifetime of a data packet and in which it can be retransmitted, on a single bearer, corresponding to an instance of the TBC MAC entity, and another, generally longer, defining the maximum lifetime of a data packet throughout the overall MAC layer, whereupon it can be retransmitted by the same or different TBC instances until expiration of the first lifetime and necessarily by a different TBC instance upon expiration of the first and until expiration of the second.

**Patentansprüche**

1. Verfahren zur Verwaltung einer drahtlosen Kommunikation zwischen einer Basisstation und mindestens einer drahtlosen Vorrichtung, wobei das Verfahren Folgendes umfasst:

• die Ausstrahlung von vermutlich freien und nutzbaren Kanälen seitens der Basisstation, wobei mittels der Basisstation eine Liste von k freien Kanälen innerhalb eines Bereichs von Zeitintervallen für eine drahtlose Verbindung mit dieser Basisstation erstellt wird, wobei diese Liste mindestens eine Slot-Nummer für jeden Kanal umfasst; und
• die regelmäßige Ausstrahlung dieser Liste seitens der Basisstation;

wobei dieses Verfahren **dadurch gekennzeichnet ist, dass** es die folgenden Schritte umfasst:

• i) Abhören der von der Basisstation ausgestrahlte Liste von k Kanälen mittels der drahtlosen Vorrichtung, um auf diese innerhalb eines bestimmten Zeitintervalls zuzugreifen;

• ii) Erstellung einer Gruppe von n Kanälen mittels der drahtlosen Vorrichtung, die zufällig aus den Kanälen ausgewählt werden, die innerhalb der Liste mit k Kanälen enthalten sind, wobei n zwischen 1 und k enthalten ist;
• iii) zufällige Anordnung, falls n größer als 1 ist, dieser Gruppe von n Kanälen mittels der drahtlosen Vorrichtung;
• iv) Auswahl seitens der drahtlosen Vorrichtung von mindestens einem Anwärter-Verbindungskanal, der an der ersten Stelle der Gruppe von n Kanälen positioniert ist;
• v) Bestimmung mittels der drahtlosen Vorrichtung, dass der im vorherigen Schritt ausgewählte Anwärter-Verbindungskanal sich im Funkstille-Modus befindet, indem dieser Kanal in mindestens einem Frame-Intervall und in mindestens einer Richtung während des Zeitraums zwischen der Ausstrahlung der von der Basis gesendeten verfügbaren Kanäle und dem Zugriffsmoment abgehört wird, auf den sich die Kanalausstrahlung bezieht; und
• vi) wenn bestimmt wird, dass der Anwärter-Verbindungskanal sich im Funkstille-Modus befindet, Einrichtung des Zugangs zwischen der drahtlosen Vorrichtung und der Basisstation mittels eines Trägers, der den ausgewählten Anwärter-Verbindungskanal verwendet;
• vii) wenn bestimmt wird, dass der Anwärter-Verbindungskanal sich nicht im Funkstille-Modus befindet, Wiederholung der Schritte i bis v beginnend mit der Beobachtung einer neuen Ausstrahlung von Kanalinformationen, die von der Basisstation ausgestrahlt werden, und Wiederholung der zufälligen Auswahl seitens der drahtlosen Vorrichtung von mindestens einem Zielkanal beruhend auf diesen neuen Informationen, bis ein Anwärter-Verbindungskanal im Funkstille-Modus gefunden wird;
• viii) Analyse einer Antwort mittels der drahtlosen Vorrichtung, die von der Basisstation aufgrund des Verbindungsherstellungsversuchs oder aufgrund des Fehlens desselben ausgestrahlt wird;
• ix) Bestimmung der Verbindung als erfolgreich, wenn die von der Basisstation aufgrund des Verbindungsherstellungsversuchs ausgestrahlte Antwort eine erfolgreiche Verbindungsnachricht enthält; und
• x) Ausführung eines Kollisionsmanagementverfahrens, das die Einrichtung einer Standby-Zeit umfasst, die entweder in Frames oder Slots gemessen werden kann und eine zufällige Komponente besitzt, wenn die von der Basisstation ausgestrahlte Antwort keine erfolgreiche Verbindungsnachricht umfasst.

2. Ein Verfahren nach Anspruch 1, **dadurch gekenn-**

zeichnet, dass dieses zusätzlich Folgendes umfasst:

• die Auswahl mindestens eines alternativen Kanals aus den anderen, in der Gruppe der n Kanäle enthaltenen Kanäle;
• Herstellung der Verbindung über den alternativen Kanal, falls dieser im Funkstille-Modus ist und der Anwärter-Verbindungskanal nicht im Funkstille-Modus ist;
• falls kein Kanal der Gruppe aus n Kanälen die Abhör- und Funkstilleüberprüfungsphase besteht, wird der Zugriffsversuch innerhalb des Zeitintervalls, auf das sich die von der Basis übertragene Kanalinformation bezieht, abgebrochen und das in Anspruch 1 definierte Verfahren wiederholt, beginnend mit der Beobachtung einer neuen Ausstrahlung von Kanalinformationen, die von der Basis ausgestrahlt werden, und Wiederholung der zufälligen Auswahl seitens der drahtlosen Vorrichtung von mindestens einem Zielkanal beruhend auf diesen neuen Informationen.

3. Ein Verfahren nach Anspruch 2, **dadurch gekennzeichnet, dass** dieses zusätzlich Folgendes umfasst:

• die Auswahl mindestens eines zusätzlichen Kanals außer dem Anwärter-Kanal und dem alternativen Kanal aus der Gruppe der n Kanäle;
• die Überprüfung, ob dieser im vorherigen Schritt ausgewählte zusätzliche Kanal sich im Funkstille-Modus befindet; und
• Herstellung der Verbindung über den ersten zusätzlichen Kanal in der Reihenfolge der Gruppe von n Kanälen, die sich im Funkstille-Modus befinden;
• falls kein Kanal der Gruppe aus n Kanälen die Abhör- und Funkstilleüberprüfungsphase besteht, wird der Zugriffsversuch innerhalb des Zeitintervalls, auf das sich die von der Basis übertragene Kanalinformation bezieht, abgebrochen und das in Anspruch 1 und 2 definierte Verfahren wiederholt, beginnend mit der Beobachtung einer neuen Ausstrahlung von Kanalinformationen, die von der Basis ausgestrahlt werden, und Wiederholung der zufälligen Auswahl seitens der drahtlosen Vorrichtung von mindestens einem Zielkanal beruhend auf diesen neuen Informationen.

4. Ein Verfahren nach einem der Ansprüche 1 bis 3, **dadurch gekennzeichnet, dass** die drahtlose Vorrichtung zur Bestimmung, ob ein Kanal sich im Funkstille-Modus befindet, eine Messung der Empfangsfeldstärke (RSSI - Receive Signal Strength Indication) in mindestens einem Zeitintervall dieses Kanals und in mindestens einer Übertragungsrichtung durchführt und diese mit einem RSSI-Schwellenwert vergleicht, wobei davon ausgegangen wird, dass sich der Kanal im Funkstille-Modus befindet, wenn der gemessene RSSI-Wert unter dem Schwellenwert liegt, wobei dieser Wert der durchschnittliche RSSI oder der in der schlechtesten Richtung oder dem schlechtesten Zeitintervall gemessene RSSI sein kann, falls mehrere Messungen durchgeführt wurden.

5. Ein Verfahren nach Anspruch 4, bei dem die über ein Slot-Zeitintervall durchgeführte RSSI-Messung den in Abschnitte unterteilten Slot umfasst, wobei deren RSSI getrennt gemessen wird und von einer Nichterfüllung der Funkstille-Kriterien ausgegangen wird, wenn einer der Abschnitte über dem Schwellenwert liegt.

6. Ein Verfahren nach Anspruch 1, bei dem die Antwort bezüglich des Verbindungsherstellungsstatus keine erfolgreiche Verbindungsnachricht umfasst, wobei dieses Verfahren die Ausführung des Kollisionsmanagementverfahrens umfasst und **dadurch gekennzeichnet ist, dass**:

- die Standby-Zeit in Frames gemessen wird, die eine ansteigende Zufallskomponente im Fall multipler Ausführungen besitzen, wobei diese Standby-Zeit als $t = a + RAN(0, j-1)$ berechnet wird, wobei $j = b * c^n$ ist und:

- n eine natürliche Reihe ist, die bei der ersten Ausführung bei 0 beginnt und bei zusätzlichen Ausführungen bis zu einem maximalen Wert von nmax ansteigt, bei dessen Erreichung der Anstieg stoppt;
- a, b, c und nmax Parameter des Systems sind, wobei a gleich 0 sein kann; und
- $RAN(0, j-1)$ eine ganze Zahl ist, die zufällig zwischen 0 und j-1 ausgewählt wird;

- anschließend die Schritte i bis iv des Anspruchs 1 durchgeführt werden;
- die Schritte v bis vii des Anspruchs 1 durchgeführt werden;
- die von der Basis gesendete Antwort gemäß den Schritten viii und ix des Anspruchs 1 bestimmt wird; und
- die Schritte dieses Anspruchs wiederholt werden, wobei der Wert n erhöht wird, falls dieser niedriger als nmax ist, falls der vorherige Schritt eine Antwort bezüglich des Verbindungsherstellungsstatus hervorruft, die keine erfolgreiche Verbindungsnachricht umfasst.

7. Ein Verfahren nach Anspruch 1, bei dem die Antwort bezüglich des Verbindungsherstellungsstatus keine erfolgreiche Verbindungsnachricht bei Ausführung des Kollisionsmanagementverfahrens umfasst, wobei die Standby-Zeit in Slots gemessen wird und das Verfahren **dadurch gekennzeichnet ist, dass**:

- ein Wert s als s = a + RAN(0, j-1) berechnet wird, wobei j = b * $c^n$ ist und:

- n eine natürliche Reihe ist, die bei der ersten Ausführung des Verfahrens bei 0 beginnt und bei jeder zusätzlichen Ausführung des Prozesses bis zu einem maximalen Wert von nmax ansteigt, bei dessen Erreichung der Anstieg stoppt;
- a, b, c und nmax Parameter des Systems sind, wobei a gleich 0 sein kann; und
- RAN(0, j-1) eine ganze Zahl ist, die zufällig zwischen 0 und j-1 ausgewählt wird;

- anschließend der in Anspruch 1 beschriebene Schritt i mindestens einmal ausgeführt wird, die Anzahl der von der Basis ausgestrahlten k Kanäle gezählt und der Schritt wiederholt und dieser Wert k akkumuliert wird, bis die dank der Wiederholungen akkumulierte Summe den Wert s erreicht; und;
- die Schritte ii bis vii des Anspruchs 1 ausgeführt werden, wenn der akkumulierte Wert den Wert s erreicht;
- mittels der drahtlosen Vorrichtung die Antwort bestimmt wird, die von der Basis aufgrund des Verbindungsherstellungsversuchs oder aufgrund des Fehlens desselben ausgestrahlt wird, um zu bestimmen, ob die Verbindung erfolgreich war; und
- die Schritte dieses Anspruchs wiederholt werden, wobei der Wert n erhöht wird, falls dieser niedriger als nmax ist, falls der vorherige Schritt eine Antwort bezüglich des Verbindungsherstellungsstatus hervorruft, die keine erfolgreiche Verbindungsnachricht umfasst.

8. Ein Verfahren nach Anspruch 1, bei dem die Antwort bezüglich des Verbindungsherstellungsstatus keine erfolgreiche Verbindungsnachricht bei Ausführung des Kollisionsmanagementverfahrens umfasst, wobei die Standby-Zeit in Slots gemessen wird und das Verfahren **dadurch gekennzeichnet ist, dass**:

- ein Wert s als s = a + RAN(0, j-1) berechnet wird, wobei j = b * $c^n$ ist und:

- n eine natürliche Reihe ist, die bei der ersten Ausführung des Verfahrens bei 0 beginnt und bei jeder zusätzlichen Ausführung des Prozesses bis zu einem maximalen Wert von nmax ansteigt, bei dessen Erreichung der Anstieg stoppt;

- a, b, c und nmax Parameter des Systems sind, wobei a gleich 0 sein kann; und
- RAN(0, j-1) eine ganze Zahl ist, die zufällig zwischen 0 und j-1 ausgewählt wird;

- der in Anspruch 1 beschriebene Schritt i mindestens einmal ausgeführt wird, die Anzahl der von der Basis ausgestrahlten k Kanäle gezählt und der Schritt wiederholt und dieser Wert k akkumuliert wird, bis die dank der Wiederholungen akkumulierte Summe den Wert s erreicht;
- wenn der akkumulierte Wert den Wert s erreicht, als Anwärter-Kanal derjenige Kanal der von der Basis übertragenen Kanäle ausgewählt wird, bei dem die Summe der akkumulierten übertragenen Kanäle den Wert s erreicht; und
- die Schritte v bis vii des Anspruchs 1 auf den im vorherigen Schritt ausgewählten Kanal angewandt werden;
- mittels der drahtlosen Vorrichtung die Antwort bestimmt wird, die von der Basis aufgrund des Verbindungsherstellungsversuchs oder aufgrund des Fehlens desselben ausgestrahlt wird, um zu bestimmen, ob die Verbindung erfolgreich war; und
- die Schritte dieses Anspruchs wiederholt werden, wobei der Wert n erhöht wird, falls dieser niedriger als nmax ist, falls der vorherige Schritt eine Antwort bezüglich des Verbindungsherstellungsstatus hervorruft, die keine erfolgreiche Verbindungsnachricht umfasst.

9. Ein Verfahren nach Anspruch 1, **dadurch gekennzeichnet, dass** dieses zusätzlich mittels der Basisstation und zum Zweck der Erhaltung der Liste freier und nutzbarer Kanäle die systematische Abhörung von Kanälen umfasst, über die es nicht überträgt, sowie die Bestimmung der Nutzbarkeit derselben durch Berechnung des RSSI-Werts.

10. Ein Verfahren nach Anspruch 1, **dadurch gekennzeichnet, dass** dieses zusätzlich, mittels der Basisstation und zum Zweck der Erhaltung der Liste freier und nutzbarer Kanäle den Empfang von Informationen zu RSSI-Messungen umfasst, die von den dort registrierten drahtlosen Vorrichtungen durchgeführt werden.

11. Ein Verfahren nach Anspruch 10, **dadurch gekennzeichnet, dass** die Informationen zu den RSSI-Messungen, die von den bei der Basis registrierten drahtlosen Vorrichtungen durchgeführt werden, an die Basis unter Verwendung eines Uplink-Trägers eines Duplex-Kanals übertragen werden, der die Kanalauswahlinformationen in absteigender Reihenfolge trägt.

12. Ein Verfahren nach einem der vorstehenden Ansprüche, **dadurch gekennzeichnet, dass** dieses zusätzlich die Definition von mindestens zwei Lebensdauern in der MAC-Schicht umfasst, wobei eine die maximale Lebensdauer eines Datenpakets definiert, in dem sie auf einem einzelnen Träger erneut übertragen werden kann, der einer Realisierung der TBC MAC Entität entspricht, und wobei eine weitere, im Allgemeinen längere Lebenszeit die maximale Lebenszeit eines Datenpakets in der gesamten allgemeinen MAC-Schicht definiert, wobei diese von derselben oder anderen TBC-Realisierungen bis zum Ablaufen der ersten Lebenszeit und notwendigerweise von einer anderen TBC-Realisierung bei Ablaufen der ersten und bis zum Ablaufen der zweiten erneut übertragen werden kann.

## Revendications

1. Un procédé de gestion de communications sans fil entre une station de base et au moins un dispositif sans fil, ledit procédé comprenant :

     • la station de base émettant des canaux vraisemblablement libres et utilisables, créant, au moyen de la station de base, une liste de k canaux libres dans une gamme d'intervalles de temps pour une connexion sans fil avec ladite station de base, où ladite liste comprend au moins un numéro de créneau pour chaque canal ; et

     • la station de base émettant périodiquement ladite liste ;

le procédé étant **caractérisé en ce qu'**il comprend les étapes suivantes :

     • i) écouter, au moyen du dispositif sans fil, la liste de k canaux émis par la station de base pour accéder dans un certain intervalle de temps ;

     • ii) créer, au moyen du dispositif sans fil, un groupe de n canaux sélectionnés de façon aléatoire parmi les canaux compris dans la liste de k canaux, n étant compris entre 1 et k ;

     • iii) commander de façon aléatoire, si n est supérieur à 1, ledit groupe de n canaux au moyen du dispositif sans fil ;

     • iv) sélectionner, au moyen du dispositif sans fil, au moins un canal de connexion candidat placé en première position dans le groupe de n canaux ;

     • v) déterminer, au moyen du dispositif sans fil, que le canal de connexion candidat sélectionné dans l'étape précédente est en mode silence radio en écoutant sur ledit canal dans au moins un intervalle de trame, dans au moins une direction durant le temps compris entre l'émission de canaux disponibles émis par la base et l'instant d'accès auquel l'émission du canal se rapporte ; et

     • vi) lorsqu'il est déterminé que le canal de connexion candidat est en mode silence radio, établir l'accès entre le dispositif sans fil et la station de base au moyen d'un support utilisant le canal de connexion candidat sélectionné ;

     • vii) lorsqu'il est déterminé que le canal de connexion candidat n'est pas en mode silence radio, répéter les étapes i à v en commençant par l'observation d'une nouvelle émission d'informations de canal émise par la station de base et en répétant la sélection aléatoire par le dispositif sans fil d'au moins un canal cible sur la base de ces nouvelles informations jusqu'à ce qu'un canal de connexion candidat en mode silence radio soit trouvé ;

     • viii) analyser, au moyen du dispositif sans fil, une réponse émise par la station de base à la tentative d'établir une connexion, ou son absence ;

     • ix) définir la connexion comme réussie lorsque la réponse émise par la station de base à la tentative d'établir une connexion, comprend un message de connexion réussie, et

     • x) exécuter un procédé de gestion de collision qui comprend l'établissement d'une période d'attente qui peut être mesurée soit en trames soit en créneaux et qui possède un élément aléatoire, lorsque la réponse émise par la station de base ne comprend pas de message de connexion réussie.

2. Un procédé, selon la revendication 1, **caractérisé en ce qu'**il consiste en outre à :

     • sélectionner au moins un canal de remplacement parmi les autres canaux compris dans le groupe de n canaux ;

     • vérifier si le canal de remplacement est en mode silence radio ;

     • établir la connexion via le canal de remplacement s'il est en mode silence radio et si le canal de connexion candidat n'est pas en mode silence radio ;

     • si aucun canal du groupe de n canaux ne réussit l'écoute et la vérification de la phase de silence radio, la tentative d'accès dans l'intervalle de temps auquel les informations de canal transmises par la base se rapportent est abandonnée et le procédé défini dans la revendication 1 est répété, en commençant par l'observation d'une nouvelle émission d'informations de canal émise par la base et en répétant la sélection aléatoire par le dispositif sans fil d'au moins un canal cible sur la base de ces nouvelles informations.

**3.** Un procédé, selon la revendication 2, **caractérisé en ce qu'**il consiste en outre à :

• choisir au moins un canal auxiliaire différent du canal candidat et du canal de remplacement dans le groupe de n canaux ;
• vérifier si ledit canal auxiliaire sélectionné dans l'étape précédente est en mode silence radio ; et
• établir la connexion via le premier canal auxiliaire en suivant l'ordre du groupe de n canaux qui sont en mode silence radio ;
• si aucun canal du groupe de n canaux ne réussit l'écoute et la vérification de la phase de silence radio, la tentative d'accès dans l'intervalle de temps auquel les informations de canal transmises par la base se rapportent est abandonnée et le procédé défini dans les revendications 1 et 2 est répété, en commençant par l'observation d'une nouvelle émission d'informations de canal émise par la base et en répétant la sélection aléatoire par le dispositif sans fil d'au moins un canal cible sur la base de ces nouvelles informations.

**4.** Un procédé, selon n'importe laquelle des revendications 1 à 3, **caractérisé en ce que**, pour déterminer si un canal est en mode silence radio, le dispositif sans fil réalise une mesure d'indication de puissance de signal reçu RSSI dans au moins un intervalle de temps dudit canal, et dans au moins une direction de transmission, et la compare avec une valeur seuil de RSSI, en considérant le canal comme étant en mode silence radio si la valeur de (RSSI) mesurée est inférieure à la valeur seuil, où ladite valeur peut être la RSSI moyenne ou la RSSI mesurée dans la plus mauvaise direction ou dans le pire intervalle de temps si plusieurs mesures ont été réalisées.

**5.** Un procédé, selon la revendication 4, où la mesure de RSSI réalisée sur un intervalle de temps créneau comprend le créneau divisé en sections, après quoi leur RSSI sont mesurées séparément et sont considérées comme ne satisfaisant pas aux critères de silence radio si l'une d'entre elles est supérieure à la valeur seuil.

**6.** Un procédé, selon la revendication 1, où la réponse d'état d'établissement de la connexion ne comporte pas de message de connexion réussie, consistant à exécuter le procédé de gestion de collision et étant **caractérisé par** :

- la période d'attente est mesurée en trames ayant un élément croissant aléatoire dans le cas de multiples exécutions, où ladite période d'attente est calculée comme $t = a + RAN(0,j-1)$, où $j = b*c^n$, étant :

- n une série d'entiers naturels partant de 0 dans la première exécution et augmentant à chaque exécution supplémentaire jusqu'à une valeur maximale nmax, à partir de laquelle elle cesse d'augmenter ;
- les paramètres a, b, c et nmax du système, où a peut être égal à 0 ; et
- RAN(0,j-1) est un nombre entier choisi de façon aléatoire entre 0 et j-1 ;
- ensuite, réaliser les étapes i à iv de la revendication 1 ;
- réaliser les étapes v à vii de la revendication 1 ;
- déterminer la réponse émise par la base, selon les étapes viii et ix de la revendication 1 ; et
- répéter les étapes de cette revendication, en augmentant la valeur de n si elle est inférieure à nmax si l'étape précédente donne lieu à une réponse d'état d'établissement de la connexion qui ne comporte pas de message de connexion réussie.

**7.** Un procédé, selon la revendication 1, où la réponse d'état d'établissement de la connexion ne comporte pas de message de connexion réussie exécutant le procédé de gestion de collision où la période d'attente est mesurée en créneaux, le procédé étant **caractérisé par** :

- le calcul d'une valeur s comme $s = a + RAN(0, j-1)$, où $j = b*c^n$, étant :

- n une série d'entiers naturels partant de 0 dans la première exécution du procédé et augmentant à chaque exécution supplémentaire du procédé jusqu'à une valeur maximale nmax, à partir de laquelle elle cesse d'augmenter ;
- les paramètres a, b, c et nmax du système, où a peut être égal à 0 ; et
- RAN(0,j-1) est un nombre entier choisi de façon aléatoire entre 0 et j-1 ; et
- exécuter l'étape i décrite dans la revendication 1 au moins une fois, en comptant le nombre de k canaux émis par la base et en répétant l'étape et en cumulant cette valeur k jusqu'à ce que la somme cumulée dans les itérations atteigne la valeur s ; et
- lorsque la valeur cumulée atteint la valeur de s, exécuter les étapes ii à vii de la revendication 1 ;
- déterminer, au moyen du dispositif sans fil, la réponse émise par la base à la tentative d'établir une connexion, ou son absence, pour déterminer si la connexion a réussi ou échoué ; et
- répéter les étapes de cette revendication, en augmentant la valeur de n si elle est inférieure à nmax si l'étape précédente donne lieu à une réponse d'état d'établissement de la connexion qui ne comporte pas de message de connexion réussie.

8. Un procédé, selon la revendication 1, où la réponse d'état d'établissement de la connexion ne comporte pas de message de connexion réussie, exécutant le procédé de gestion de collision où la période d'attente est mesurée en créneaux, le procédé étant **caractérisé par** :

   - le calcul d'une valeur s comme s = a + RAN(0, j-1), où $j = b \cdot c^n$, étant :

      - n une série d'entiers naturels partant de 0 dans la première exécution du procédé et augmentant à chaque exécution supplémentaire du procédé jusqu'à une valeur maximale nmax, à partir de laquelle elle cesse d'augmenter ;
      - les paramètres a, b, c et nmax du système, où a peut être égal à 0 ; et
      - RAN(0,j-1) est un nombre entier choisi de façon aléatoire entre 0 et j-1 ; et
      - exécuter l'étape i décrite dans la revendication 1 au moins une fois, en comptant le nombre de k canaux émis par la base et en répétant l'étape et en cumulant cette valeur k jusqu'à ce que la somme cumulée dans les itérations atteigne la valeur s ;
      - lorsque la valeur cumulée atteint la valeur de s, sélectionner comme canal candidat le canal parmi ceux transmis par la base dans lequel la somme des canaux cumulés transmis atteint la valeur s ; et
      - appliquer les étapes v à vii de la revendication 1 au canal sélectionné dans l'étape précédente ;
      - déterminer, au moyen du dispositif sans fil, la réponse émise par la base à la tentative d'établir une connexion, ou son absence, pour déterminer si la connexion a réussi ou échoué ; et
      - répéter les étapes de cette revendication, en augmentant la valeur de n si elle est inférieure à nmax si l'étape précédente donne lieu à une réponse d'état d'établissement de la connexion qui ne comporte pas de message de connexion réussie.

9. Un procédé, selon la revendication 1, **caractérisé en ce qu'**il consiste en outre, au moyen de la station de base et dans le but d'obtenir la liste des canaux libres et utilisables, à écouter systématiquement les canaux sur lesquels elle n'émet pas et à déterminer leur exploitabilité en calculant la valeur RSSI.

10. Un procédé, selon la revendication 1, **caractérisé en ce qu'**il consiste en outre, au moyen de la station de base et dans le but d'obtenir la liste des canaux libres et utilisables, à recevoir des informations sur les mesures RSSI réalisées par les dispositifs sans fil enregistrés à cet endroit.

11. Un procédé, selon la revendication 10, **caractérisé en ce que** les informations sur les mesures RSSI réalisées par les dispositifs sans fil enregistrés à la base sont transmises à la base en utilisant un support de liaison montante d'un canal duplex qui porte les données de sélection de canal dans l'ordre descendant.

12. Un procédé, selon n'importe laquelle des revendications précédentes, **caractérisé en ce qu'**il consiste en outre à définir au moins deux durées de vie dans la couche MAC, l'une définissant la durée de vie maximale d'un paquet de données et dans laquelle il peut être retransmis, sur un unique support, correspondant à une instance de l'entité TBC MAC, et une autre, généralement plus longue, définissant la durée de vie maximale d'un paquet de données dans l'ensemble de la couche MAC, après quoi il peut être retransmis par les instances TBC identiques ou différentes jusqu'à l'expiration de la première durée de vie et nécessairement par une instance TBC différente à l'expiration de la première et jusqu'à l'expiration de la seconde.

Channel pre-selection by the Base station → Broadcast mechanism of the cannel selection information

Base station (Fixed Part)

Listening to cannel selection information broadcasted by the base

Channel listening

Wireless devices (Portable part)

Channel selection process → Bearer setup attempt → Success? → Yes → Bearer established. End of the process.

No

Repetition of algorithm M1

Collision possible? → No / Yes → Collision handling → Bearer setup attempt → Success? → Yes → Bearer established. End of the process.

No

Repetition of the algorithm with increased random component

EP 2 925 073 B1

## FIG. 1

FIG. 2

**FIG. 3**

FIG. 4

**EP 2 925 073 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Digital Enhanced Cordless Telecommunications (DECT); DECT Ultra Low Energy (ULE); Machine to Machine Communications; Part 1: Home Automation Network (phase 1). *TS 102 939-1*
- ETSI TC DECT 20th - 22nd November 2012 meeting; ULE FP traffic channel selection. EUROPEAN TELECOMMUNICATIONS STANDARDS INSTITUTE, 19 November 2012
- 25th September 2012 TC-DECT ULE conference call; ULE MAC ME issues; DECT(12)000237r1_ULE_MAC-layer_issues. ETSI DRAFT; DECT(12)000237R1_ULE_MAC-LAYER_ISSUES. EUROPEAN TELECOMMUNICATIONS STANDARDS INSTITUTE, 25 September 2012